# EUROPEAN PATENT SPECIFICATION

(11) **EP 0 707 869 B1**
(45) Date of publication and mention of the grant of the patent: **17.03.1999**
(21) Application number: 95850162.9
(22) Date of filing: 19.09.1995
(51) Int. Cl.: A62D 3/00, B09B 3/00, C22B 43/00

(54) **A method for treating mercury-contaminated materials**
Verfahren zur Behandlung von mit Quecksilber kontaminierten Materialen
Procédé de traitement de matériaux contaminés par mercure

(30) Priority: 20.09.1994 SE 9403139
(43) Date of publication of application: 24.04.1996
(73) Proprietor: Drain Guard System Sweden AB, 400 92 Göteborg (SE)
(72) Inventor: Ludvigsson, Björn, S-932 34 Örviken (SE); Strömberg, Ulf, S-411 29 Göteborg (SE)
(74) Representative: Lundin, Björn-Eric

(56) References cited:
- EP-A- 0 497 749
- DE-A- 4 214 885
- US-A- 4 268 306
- US-A- 4 715 838
- DATABASE WPI Section Ch, Week 9413 Derwent Publications Ltd., London, GB; Class L03, AN 94-108118 XP002078791 & SU 1 792 443 A (UNIV TECH LENGD) , 30 January 1993

## Description

The present invention relates to a method for treating mercury-contaminated materials, and more particularly to a method for rendering harmless used fluorescent tubes and other similar crushable waste products that contain mercury, such as mercury lamps, wherein the waste products are processed in a closed container to reduce their mercury content by ventilating the container, and wherein the ventilated gas flow is passed through a filter which can effectively take-up mercury.

A method of the aforesaid kind is described in the earlier European Patent Specification EP-B-0497749 (Boliden Contech AB). The method is intended for the treatment of all types of mercury-containing waste products in principle, wherein the mercury content of the products is reduced successively by ventilating off mercury vapour and capturing the vapour in a filter, for instance a selenium filter, in which the mercury is bound chemically to form the highly stable compound HgSe.

Important types of mercury-containing waste products are consumed fluorescent tubes, mercury lamps and the like. It is probable that these products will represent the predominant source of mercury emission for a long time to come, unless they are handled in a manner that can be found acceptable from an environmental aspect. The safe handling of such products is therefore given a high priority by local authorities and public cleansing entrepreneurs. As opposed to other mercury-contaminated waste which contains unspecified quantities of mercury, fluorescent tubes and mercury lamps contain solely elementary mercury in quantities that are relatively well known. This enables the course taken by the mercury-removing process to be controlled and, under certain conditions, enables the process time to be readily calculated theoretically. It is necessary to crush the fluorescent tubes inside the closed container, in order to free the mercury and to vapourize and remove the mercury by ventilation. When the rate of vapourization is sufficiently high, a state of dynamic equilibrium will prevail in the container during the major part of the process. The mercury content of the container will then be constant and equal to the saturation content at prevailing temperatures and the mercury will therefore be captured at the same rate as it is vapourized. When all liquid mercury has been vapourized, the mercury content of the container will decrease in a manner that can be described with known kinetic theory. Consequently, the known technique (EP-B-0497749) of handling and rendering harmless such products in an environmentally attractive manner would seem to be an attractive method of treating fluorescent tubes and like products.

However, it has not been found possible to remove mercury from the glass crush quickly enough and to a sufficient extent, despite mercury having a very low heat of vapourization. Immediately after crushing a sufficiently large number of fluorescent tubes in the container, the mercury content will rise to the saturation content, or to immediately beneath this level, but after some minutes will then fall far beneath this content level and then slowly decrease and fluctuate in a long drawn-out process. When only air is blown through the container, at a temperature of about 15-20°C, significant quantities of mercury will still remain in the crush after more than one month's operating time. Although this period can be shortened somewhat by stirring the crush as heat is delivered thereto, the amount of mercury that remains after the treatment is still too high and, furthermore, is partially in an oxide form.

An analysis of the aforesaid problem shows that several factors may contribute towards the inability of maintaining a sufficiently high rate of vapourization. When fluorescent tubes are crushed in a closed container, part of the mercury will be vapourized instantaneously, although the major part will remain liquid, in the form of a plurality of small droplets. These droplets are quickly enveloped by an oxide outer layer and contaminants, which make vapourization difficult. As the mercury vapourizes and the diameter of the mercury droplets decreases, the stability of the surface layer will increase since its thickness relative to the diameter of the droplets will also increase. Taken together with the fact that the total vapour delivering surface of the mercury droplets decreases, this means that vapourization practically ceases when the droplets have reduced to a certain size. The number of droplets and their size distribution is unknown and can be assumed to vary from case to case.

The end caps of fluorescent tubes are made of aluminium. Aluminium is quickly coated with a thin oxide layer (corundum) in air, which protects the metal. The oxide layer on the end caps is damaged when the fluorescent tubes are crushed and the glass crush is stirred in the container and the damaged aluminium will be amalgamated when coming into contact with a mercury droplet. Since the vapour pressure of mercury over amalgam is generally lower than the vapour pressure over pure mercury, this process also makes vapourization difficult.

Both stirring and the supply of heat in such processes are unfavourable to the expulsion of mercury vapour. As the material is stirred or agitated, it is also crushed autogenously to successively smaller dimensions, which makes effective ventilation or aeration of the container difficult to achieve. Elevated temperatures and long process times also favour oxidation of the mercury.

It has now been found possible to avoid the problems described in the aforegoing when handling fluorescent tubes and similar crushable mercury-containing waste products in containers or depot plants to a large extent when using the earlier known technique. The object of the present invention is to provide such an improved method. This improved method comprises the steps set forth in the following Claims. Thus, in accordance with the method, the waste products are heated to a temperature at which the mercury enclosed in the products is effectively vapourized, whereafter said products are fragmented or crushed in the closed container so as to release the mercury vapour and allow it to spread in the container, whereafter the container is ventilated and the mercury vapour captured in a filter, e.g. by sorption or some other filter-capturing process.

The products may either be heated outside the container or inside said container, provided that the products are not fragmented prior to being heated to a predetermined temperature. The products will preferably be heated to a temperature of at least 150°C, and more preferably to a temperature within the range of 175-200°C.

The products may be crushed in the container either mechanically, for instance by means of agitators, stirrers, separate crushers or the like, or by means of other energy sources, such as ultrasonic sources.

The problems mentioned in the introduction with regard to the vapourization of mercury are thus solved in a simple and effective fashion, by vapourizing the mercury enclosed in the fluorescent tubes prior to crushing said tubes, and by preventing mercury from re-condensing in the container. The mercury is vapourized by applying energy in some suitable form, for instance by heating the tubes with hot air or some other medium, or by heating mercury and other metal(s) in the tubes by electric induction or in some other appropriate manner, or by using a combination of these methods. Thus, essentially all mercury will be generally in a gaseous state from the very beginning, with the exception of that mercury which may have amalgamated the electrode metals in the tube, therewith greatly reducing the amount of aluminium amalgam formed. An appropriate choice of filter size and air flow will enable process times to be kept short, which reduces the risk of forming mercuric oxide. Any small quantities of oxide that may possibly form will also be in a gaseous state and will be captured by the filter when said filter is a selenium filter that is maintained at a temperature of 80-120°C. It may be beneficial in some cases to provide the filter with a further mercury-capturing filter from which the flow of filter gas is returned to the container. By controlling the rate at which fluorescent tubes are crushed, it can be ensured that the amount of mercury vapour delivered per unit of time will not be greater than what can be handled by the filter. By diluting with air that has been cleansed from mercury, it is possible to prevent the mercury content of the container exceeding a given level, and therewith also to prevent the mercury recondensing, even though the temperature in the container is lower than the temperature of the fluorescent tubes when crushed. It is thought that the improved method according to the invention will afford at least two significant advantages over the known technique, namely that:
- The process time can be kept short and that the purified crush from a fluorescent tube batch can be emptied from the container on the same day that the tubes are crushed.
- The treated crush will contain very little mercury; probably the only mercury that remains will be elementary mercury in the form of amalgam. It is believed that the amount of aluminium amalgam formed will be minimal in the majority of cases. Other metals present in fluorescent tubes are not readily amalgamated. Subsequent to treatment, any mercury remaining in the crush will be concentrated at the end caps of the tubes, which caps can be separated from the crush and further treated if found suitable or desirable.

## Claims

1. A method for rendering used fluorescent tubes and other mercury-containing crushable waste products harmless, wherein the waste is treated in a closed container while reducing the amount of mercury therein by ventilating the container and passing the ventilation gas flow through a filter which is capable of effectively capturing mercury, **characterized** by heating the waste products to a temperature at which the mercury enclosed in the waste products is effectively vapourized, and thereafter fragmenting or crushing the waste products in the closed container so as to free the mercury vapour and allow said vapour to spread in the container, whereafter the container is ventilated and the mercury vapour captured by said filter.

2. A method according to Claim 1, **characterized** by heating the waste products completely or partially outside the container.

3. A method according to Claim 1, **characterized** by heating the waste products in the container while suspending the product fragmenting or crushing procedure.

4. A method according to Claim 1, **characterized** by heating the waste products to a temperature of at least 150°C, preferably within the range of 175-200°C before commencing the fragmenting or crushing procedure.

5. A method according to Claims 1-4, **characterized** by using a selenium filter.

6. A method according to Claims 1-5, **characterized** by providing the container with a further mercury-capturing filter and returning the gas flow from said filter back to the container.

## Patentansprüche

1. Verfahren zum Unschädlichmachen benutzter fluoreszierender Röhren und anderer quecksilberhaltiger zerkleinerbarer Abfallprodukte, bei dem das Abfallprodukt in einem geschlossenen Behälter behandelt wird, während die Quecksilbermenge darin durch Belüften des Behälters und Führung des Belüftungsgasstromes durch ein Filter, welches wirksam Quecksilber einfangen kann, vermindert wird, **dadurch gekennzeichnet**, daß man die Abfallprodukte auf eine Temperatur erwärmt, bei welcher das in den Abfallprodukten eingeschlossene Quecksilber wirksam verdampft wird, und danach die Abfallprodukte in dem geschlossenen Behälter so zerkleinert oder zerstößt, daß der Quecksilberdampf freigesetzt wird und sich in dem Behälter ausbreiten kann, wonach der Behälter belüftet und der Quecksilberdampf von dem Filter eingefangen wird.

2. Verfahren nach Anspruch 1, **dadurch gekennzeichnet**, daß man die Abfallprodukte außerhalb des Behälters vollständig oder teilweise erwärmt.

3. Verfahren nach Anspruch 1, **dadurch gekennzeichnet**, daß man die Abfallprodukte in dem Behälter erhitzt, während man das Produktzerkleinern oder -zerstoßen unterbricht.

4. Verfahren nach Anspruch 1, **dadurch gekennzeichnet**, daß man die Abfallprodukte auf eine Temperatur von wenigstens 150 °C, vorzugsweise im Bereich von 175 bis 200 °C, vor Beginn des Zerkleinerns oder Zerstoßens erwärmt.

5. Verfahren nach Anspruch 1 bis 4, **dadurch gekennzeichnet**, daß man ein Selenfilter verwendet.

6. Verfahren nach Anspruch 1 bis 5, **dadurch gekennzeichnet**, daß man den Behälter mit einem weiteren Quecksilber einfangenden Filter versieht und den Gasstrom aus diesem Filter zurück zu dem Behälter führt.

## Revendications

1. Procédé pour rendre des tubes fluorescents usagés et d'autres déchets broyables contenant du mercure non dangereux, dans lequel le déchet est traité dans un récipient fermé tout en y réduisant la quantité de mercure en ventilant le récipient et en faisant passer la circulation de gaz de ventilation par un filtre qui peut capter de manière efficace le mercure, caractérisé en ce que l'on chauffe les déchets à une température à laquelle le mercure enfermé dans les déchets est efficacement vaporisé et ensuite on fragmente ou broie les déchets dans le récipient fermé de manière à libérer la vapeur de mercure et à permettre à ladite vapeur de se disperser dans le récipient, après quoi le récipient est ventilé et la vapeur de mercure captée par ledit filtre.

2. Procédé suivant la revendication 1, caractérisé en ce qu'on chauffe les déchets complètement ou partiellement à l'extérieur du récipient.

3. Procédé suivant la revendication 1, caractérisé en ce qu'on chauffe les déchets dans le récipient tout en suspendant le processus de fragmentation ou de broyage des produits.

4. Procédé suivant la revendication 1, caractérisé en ce qu'on chauffe les déchets à une température d'au moins 150°C, avantageusement dans l'intervalle de 175-200°C avant de commencer le processus de fragmentation ou de broyage.

5. Procédé suivant l'une quelconque des revendications 1 à 4, caractérisé en ce qu'on utilise un filtre au sélénium.

6. Procédé suivant l'une quelconque des revendications 1 à 5, caractérisé en ce qu'on équipe le récipient d'un autre filtre captant le mercure et en ce que l'on renvoie la circulation gazeuze dudit filtre au récipient.
